# EUROPEAN PATENT SPECIFICATION

(11) **EP 1 621 486 B1**
(45) Date of publication and mention of the grant of the patent: **28.02.2007**
(21) Application number: 04425585.9
(22) Date of filing: 29.07.2004
(51) Int. Cl.: B65G 25/06, B65G 27/22, B65G 27/14

(54) **Pneumatic device for transferring materials**
Pneumatische Vorrichtung zum Übertragen von Materialien
Dispositif pneumatique de transfert de materiaux

(43) Date of publication of application: 01.02.2006
(73) Proprietor: HERRBLITZ MODULAR SYSTEM SRL, 10155 Torino (IT)
(72) Inventor: Placido, Giusto, C/P Herrblitz Modular System SRL, 10155 Torino (IT)
(74) Representative: Garavelli, Paolo

(56) References cited:
- WO-A-01/76988
- US-A- 5 373 777

## Description

The present invention refers to a pneumatic device for transferring various types of materials, being them organised in batches or randomly.

The known prior art provides for several arrangements for transporting materials that operate both continuously and discontinuously: these known conveyors are, for example, of the roller, band, chain, vibrating, pusher roller or trolley types. There are also, as known, pneumatic conveyors that take care of transferring powdery or granular solid substances inside tubing through an air current with adequate speed.

A pneumatic device for actuating a tray is known from WO 01/76988.

The prior art further provides for pneumatically-operated handling devices for in-batch or random materials having a reciprocating movement and generally comprising at least one power cylinder and one different stroke speed adjusting device. It is obvious that such known devices have greater sizes and costs with respect to a device that provides for an arrangement aimed to integrate power cylinder and adjusting device.

Object of the present invention is solving the above prior-art problems by providing a pneumatic device for transferring materials in batches or random equipped with an alternate transport movement in which the power cylinder integrates a stroke speed adjusting device for the cylinder itself allowing to obtain, with the same encumbrance with respect to similar known devices, a higher available power.

The above and other objects and advantages of the invention, as will appear from the following description, are obtained by a pneumatic device for transferring materials as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:

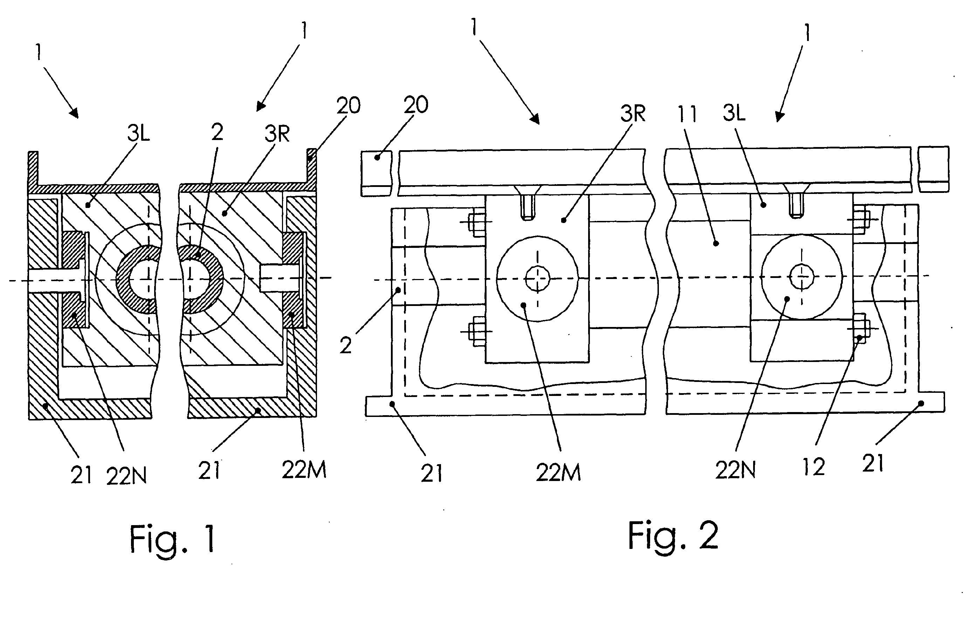

- FIG. 1 is a front sectional view of two parts of an embodiment of the pneumatic device according to the present invention;
- FIG. 2 shows a side sectional view of the two parts shown in Fig. 1;
- FIG. 3 shows a side sectional view of an operating step of an embodiment of the pneumatic device according to the present invention;
- FIG. 4 shows a side sectional view of another operating step of an embodiment of the pneumatic device according to the present invention shown in FIG. 3;
- FIG. 5 shows a side sectional view of an operating step of another embodiment of the pneumatic device according to the present invention; and
- FIG. 6 shows a side sectional view of another operating step of the embodiment of the pneumatic device according to the present invention shown in FIG. 5.

With reference to the Figures, it is possible to note that the pneumatic device 1 for transferring materials according to the present invention is composed of one raceway 20, on which the materials to be transferred are laid, connected to a pneumatic cylinder 11, comprising a containment case 3C, two heads 3R and 3L and constrained by means of at least two tie rods 12, whose piston 5 is supported by a stem 2 secured to a supporting frame 21. The piston 5 realises, inside the pneumatic cylinder 11, two chambers R and L which, suitable supplied and discharged with compressed air, make the cylinder 11 reciprocate.

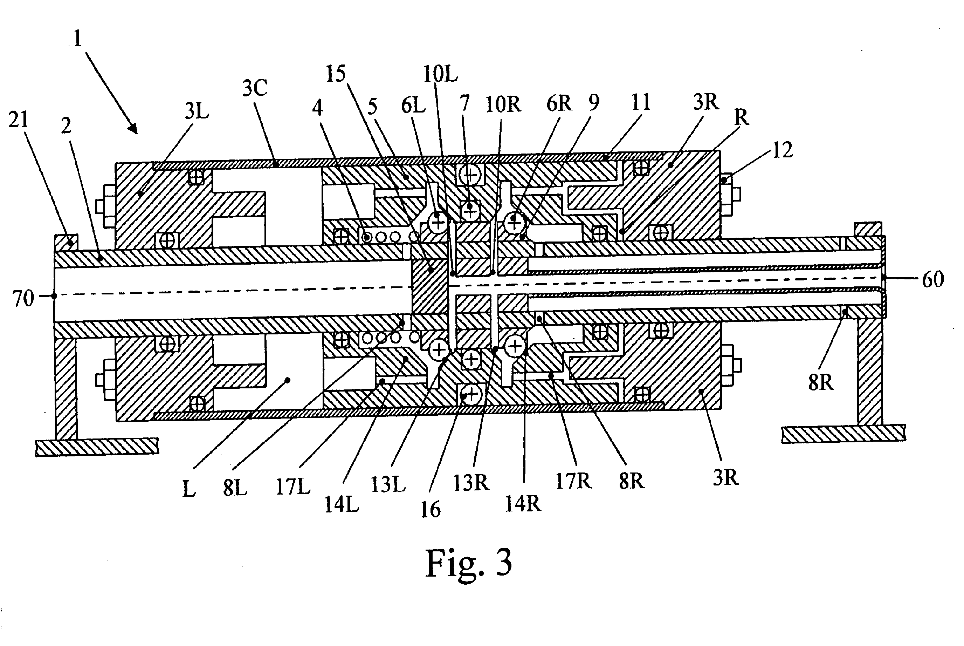

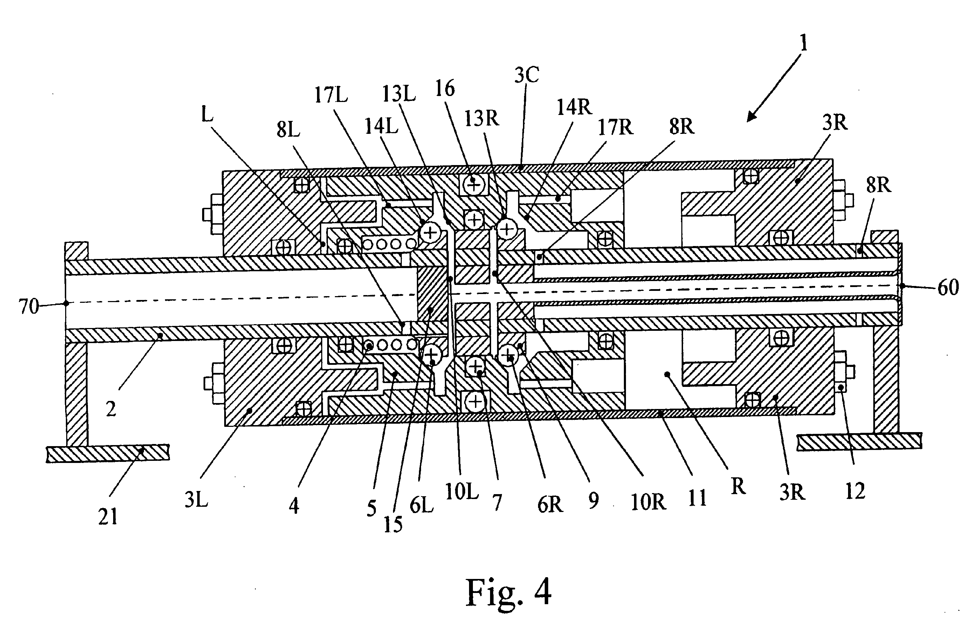

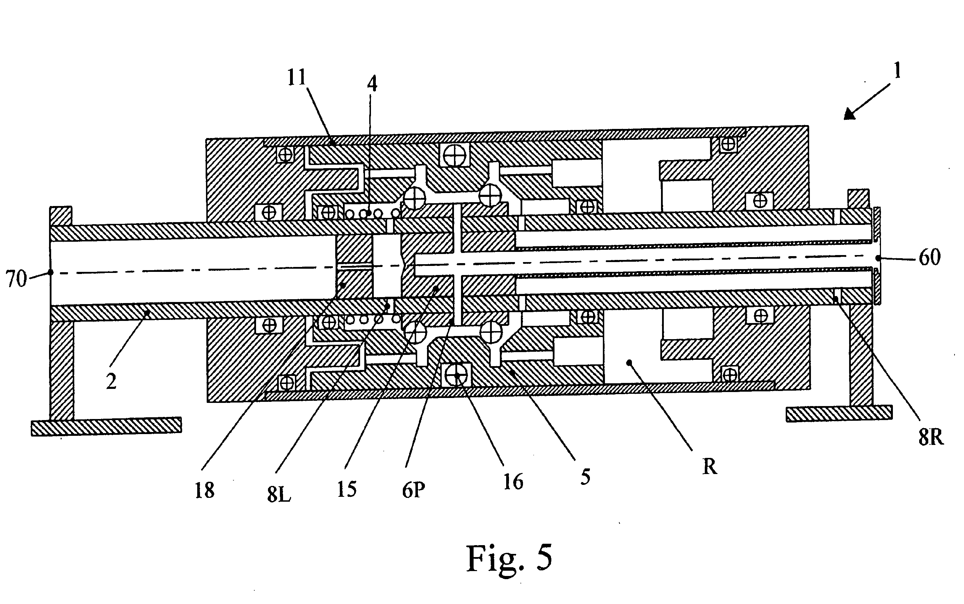

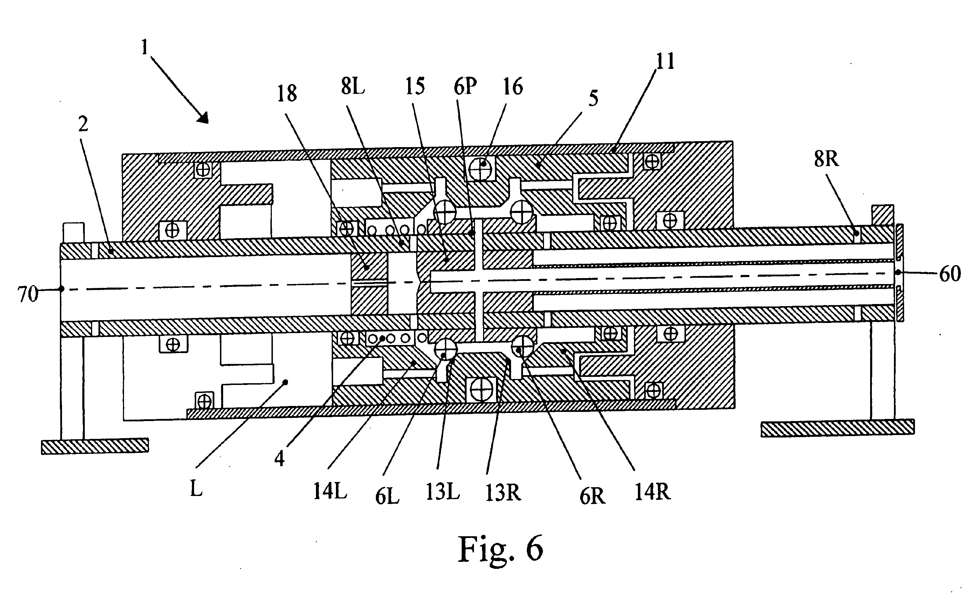

The stem 2 has a tubular cylinder section and the cylinder 11 slides along its longitudinal axis. A ring 9 is secured to the stem 2 in order to guarantee a pneumatic seal; moreover, two housing seats, respectively for two O-rings 6L and 6R, are obtained on the stem 2. Inside the stem 2, a manifold 15, connected to the compressed air delivery system 60, is placed and secured with pneumatic seal. In a first embodiment of the present invention, either the pneumatic supply nozzles 10L and 10R, as shown in FIG. 3 and 4, are connected to the manifold 15, or, in an alternate embodiment of the present invention, a pneumatic supply nozzle 6P, as shown in FIG. 5 and 6, is connected to the manifold 15. The stem 2 is further equipped with at least two orifices 8L and 8R, which will be described below.

Inside the piston 5, four surfaces 14L, 13L, 13R and 14R shaped as a frustum of cone are obtained for supplying and discharging air and the O-rings 6L and 6R are assembled between such surfaces. Moreover, inside the piston 5, a plurality of radial holes 17R and 17L are obtained, which allow the pneumatic connection of the two chambers R and L of the pneumatic cylinder 11 with the frustum-of-cone-shaped surfaces 14L, 13L, 13R and 14R for supplying and discharging. In the embodiment of the present invention in which two pneumatic supply nozzles 10L and 10R can be found, the piston 5 is equipped inside with a housing seat and a O-ring 7; in another embodiment of the present invention in which a single supply nozzle 6P is provided, such sealing ring 7 and its related seat are missing.

The piston 5 is further equipped, on an external surface thereof, with a housing seat and a pneumatic sealing ring 16.

Coaxially with the stem 2, a spring 4 is placed, which, when there is no compressed air supply to the device 1, keeps the piston 2 in an end-of-stroke position, in particular with a first surface 13L shaped as a frustum of cone that abuts against the sealing ring 6L and with a second surface 14R shaped as a frustum of cone that abuts against the sealing ring 6R.

The alternate movement of the cylinder 11 is supported by at least two wheels 22M directly assembled onto the cylinder 11 itself or, alternatively, by two wheels 22N secured onto the frame 21; alternatively the wheels 22M or 22N can be replaced with linear ball bearings, roller bearings or support slides (not shown).

A description of a possible operating cycle of the device 1 according to the invention will be described below, merely as a non-limiting example.

With reference to the cycle starting condition generated by the thrust of the spring 4 shown in FIG. 3, the piston 5 is offset rightwards with respect to the piston 11 so that, by inserting compressed air from the compressed air delivery system 60 into the chamber R of the cylinder 11 by means of the manifold 15 and the nozzle 10R, such air entering the chamber R through the open frustum-of-cone-shaped surface 13R and the radial holes 17R, the cylinder 11 moves rightwards; simultaneously, air contained in the chamber L is discharged outside the device 1 through the radial holes 17L, the open frustum-of-cone-shaped surface 14L, the orifices 8L and the exhaust 70.

In the right end-of-stroke, the cylinder 11 will exert an axial thrust onto the piston 5 moving this latter rightwards too, so that the previously-described supply and discharge conditions will be reversed: in particular, as shown in FIG. 4, the compressed air coming from the manifold 15, through the nozzle 10L, the open frustum-of-cone-shaped surface 13L and the radial holes 17L enters into the chamber L and consequently the cylinder 11 will move leftwards, thereby assuming the position shown in FIG. 3 and described previously. Simultaneously, the air contained in the chamber R is discharged outside through the radial holes 17R, the open frustum-of-cone-shaped surface 14R and the orifices 8R. At the end of the leftward stroke of the cylinder 11, the piston 5 will be again pushed leftwards so that, without interruptions, the previously-described air supply and discharge conditions will be reproduced.

In the embodiment of the device 1 equipped with two pneumatic supply nozzles 10L and 10R separated by the O-ring 7, the different two-way speeds of the cylinder 11 according to the present invention are realised by making the pneumatic flow-rate of the nozzles 10L and 10R different.

In the alternative embodiment of the device 1 equipped with a single pneumatic supply nozzle 6P, the different two-way speeds of the cylinder 11 are obtained by suitably calibrating the air discharge flow-rates, for example by interposing a throttling device 18 upstream of the exhausts.

## Claims

1. Pneumatic device (1) for transferring various type of materials arranged in batches and/or randomly **characterised by** an alternate movement for transporting said material having two-way stroke speeds that can be made different, comprising:
- a raceway (20) adapted to support said materials to be transferred, said raceway (20) being connected to a pneumatic cylinder (11) sliding with an alternate movement along a tubular stem (2), secured to a support frame (21), adapted to carry compressed air supply and discharge inside it; **characterised in** further comprising :
- a piston (5) of said pneumatic cylinder (11) supported by said stem (2) and adapted to determine the sliding end-of-strokes of said pneumatic cylinder (11), said piston (5) realising two chambers (R, L) inside said pneumatic cylinder (11) and equipped inside it with at least four surfaces (14L, 13L, 13R, 14R) shaped as a frustum of cone for supplying and discharging the compressed air, at least two sealing rings (6L, 6R) being assembled between said surfaces, and a plurality of radial holes (17R, 17L) adapted to allow a pneumatic connection of said chambers (R, L) of said pneumatic cylinder (11) with said surfaces (14L, 13L, 13R, 14R) shaped as a frustum of cone for supplying and discharging; said stem (2) being equipped inside with a manifold (15) communicating with a compressed air system (60) and connected to at least one pneumatic supply nozzle (6P) adapted to supply said compressed air to said chambers (R, L) and to allow an alternate sliding movement of said cylinder (11);
- a spring (4) arranged coaxially with said stem (2) and adapted, when there is no compressed air supply to said device (1), to keep said piston (2) in an end-of-stroke position; and
- at least two exhausts of said compressed air, each exhaust communicating with one of said chambers (L, R).

2. Pneumatic device (1) according to claim 1, **characterised in that** a sealing ring (9) adapted to guarantee a pneumatic seal is secured to said stem (2).

3. Pneumatic device (1) according to claim 1, **characterised in that** said piston (5) is equipped on an external surface thereof with a housing seat for a pneumatic sealing ring (16).

4. Pneumatic device (1) according to claim 1, **characterised in that** said stem (2) is equipped with two housing seats for two pneumatic sealing rings (6L, 6R).

5. Pneumatic device (1) according to claim 1, **characterised in that** said manifold (15) is connected to at least two pneumatic supply nozzles (10L, 10R) separated by a pneumatic sealing ring (7).

6. Pneumatic device (1) according to claim 1, **characterised in that** said alternate movement of said cylinder (11) is supported by at least two wheels (22M) secured to said cylinder (11).

7. Pneumatic device (1) according to claim 1, **characterised in that** said alternate movement of said cylinder (11) is supported by at least two wheels (22N) secured to said frame (21).

8. Pneumatic device (1) according to claim 1, **characterised in that** said alternate movement of said cylinder (11) is supported by linear ball bearings and/or roller bearings and/or with support slides.

9. Pneumatic device (1) according to claim 1, **characterised in that** said two-way speeds that can be made different of said alternate movement of said cylinder (11) are realised by reducing an air flowrate of said air exhausts by interposing a throttling device (18).

10. Pneumatic device (1) according to claim 5, **characterised in that** said two-way speeds that can be made different of said alternate movement of said cylinder (11) are realised by making the compressed air flow-rates of said two pneumatic supply nozzles (10R, 10L) mutually different.

## Patentansprüche

1. Pneumatische Vorrichtung (1) für die Übertragung von Materialien verschiedener Art in Behältern und/oder lose, die durch eine abwechselnde Transportbewegung des Materials mit differenzierbaren Geschwindigkeiten des Vor- und Rücklaufs **gekennzeichnet** ist und folgendes enthält:
- eine Führungsschiene (20) für die Halterung der genannten Materialien, die übertragen werden müssen, diese Führungsschiene (20) ist mit einem pneumatischen Gleitzylinder (11), der eine abwechselnde Bewegung entlang eines rohrförmigen Schaftes (2) ausführt, verbunden, welcher an einem Stützrahmen (21) befestigt ist und in seinem Inneren die Versorgung und den Ablass der Druckluft ausführt;
Sie **dadurch gekennzeichnet, dass** sie außerdem folgendes einschließt:
- einen Kolben (5) des genannten pneumatischen Zylinders (11), der durch den genannten Schaft (2) gestützt wird und dazu dient, die Endanschläge der Gleitung des genannten pneumatischen Zylinders (11) zu bestimmen, dieser Kolben (5) bildet zwei Kammern (R, L) innerhalb des genannten pneumatischen Zylinders (11) und ist in seinem Inneren mit mindestens vier kegelstumpfförmigen Flächen (14L, 13L, 13R, 14R) für die Versorgung und den Ablass der Druckluft, zwischen denen mindestens zwei Dichtringe (6L, 6R) montiert sind, und mit mehreren Radialbohrungen (17R, 17L) versehen, die eine pneumatische Verbindung der genannten Kammern (R, L) des genannten pneumatischen Zylinders (11) mit den genannten kegelstumpfförmigen Flächen (14L, 13L, 13R, 14R) für die Versorgung und den Ablass ermöglichen; der genannte Schaft (2) ist in seinem Inneren mit einem Kollektor (15) ausgestattet, der mit einer Druckluftanlage (60) und mit mindestens einer Druckluftdüse (6P) verbunden ist, die die genannten Kammern (R,L) mit Druckluft versorgen und eine abwechselnde Gleitbewegung des genannten Zylinders (11) ermöglichen muss;
- eine Feder (4) die koaxial zum genannten Schaft (2) angeordnet ist und bei Fehlen der Druckluftversorgung an der genannten Vorrichtung 1 den genannten Kolben (2) in einer Position des Endanschlags halten muss; und
- mindestens zwei Ablässe der genannten Druckluft, die jeweils mit einer der genannten Kammern (L, R) verbunden sind.

2. Pneumatische Vorrichtung (1) gemäß Patentanspruch 1, die **dadurch gekennzeichnet ist, dass** ein Dichtring (9), der für die Gewährleistung einer pneumatischen Dichte dient, am genannten Schaft (2) befestigt ist.

3. Pneumatische Vorrichtung (1) gemäß Patentanspruch 1, die **dadurch gekennzeichnet ist, dass** der besagte Kolben (5) mit einer Außenfläche, einer Aufnahme und einem Druckluft-Dichtring (16) ausgestattet ist.

4. Pneumatische Vorrichtung (1) gemäß Patentanspruch 1, die **dadurch gekennzeichnet ist, dass** der genannte Schaft (2) mit zwei Aufnahmen von zwei Druckluft-Dichtringen (6L, 6R) ausgestattet ist.

5. Pneumatische Vorrichtung (1) gemäß Patentanspruch 1, die **dadurch gekennzeichnet ist, dass** der genannte Kollektor (15) mit mindestens zwei Druckluftdüsen (10L, 10R) verbunden ist, die durch einen Druckluft-Dichtring (7) getrennt sind.

6. Pneumatische Vorrichtung (1) gemäß Patentanspruch 1, die **dadurch gekennzeichnet ist, dass** die genannte abwechselnde Bewegung des genannten Zylinders (11) durch mindestens zwei Räder (22M) abgestützt wird, die am genannten Zylinder (11) befestigt sind.

7. Pneumatische Vorrichtung (1) gemäß Patentanspruch 1, die **dadurch gekennzeichnet ist, dass** die genannte abwechselnde Bewegung des genannten Zylinders (11) durch mindestens zwei Räder (22N) abgestützt wird, die am genannten Rahmen (21) befestigt sind.

8. Pneumatische Vorrichtung (1) gemäß Patentanspruch 1, die **dadurch gekennzeichnet ist, dass** die genannte abwechselnde Bewegung des genannten Zylinders (11) durch zwei lineare Kugel- und/oder Rollenlager und/oder durch Stütznasen abgestützt wird.

9. Pneumatische Vorrichtung (1) gemäß Patentanspruch 1, die **dadurch gekennzeichnet ist, dass** die genannten differenzierbaren Geschwindigkeiten des Vor- und Rücklaufs der genannten abwechselnden Bewegung des genannten Zylinders (11) **dadurch** realisiert werden, dass die Luftförderung der genannten Luftablässe durch Dazwischenlegen einer Drossel (18) reduziert wird.

10. Pneumatische Vorrichtung (1) gemäß Patentanspruch 5, die **dadurch gekennzeichnet ist, dass** die genannten differenzierbaren Geschwindigkeiten des Vor- und Rücklaufs der genannten abwechselnden Bewegung des genannten Zylinders (11) **dadurch** realisiert werden, dass die Druckluftförderung der genannten Druckluftdüsen (10R, 10L) zwischen ihnen differenziert wird.

## Revendications

1. Dispositif pneumatique (1) pour le transfert de matériels en tous genres en colis et/ou en vrac, **caractérisé par** un mouvement alterné de transport dudit matériel avec des vitesses de course aller-retour différenciables et comprenant:
- une rigole (20) apte au soutien desdits matériels à déplacer, cette rigole (20) étant reliée à un vérin pneumatique (11) glissant avec un mouvement alterné le long d'une tige tubulaire (2), fixée à un cadre de soutien (21) et capable d'apporter l'alimentation et l'échappement de l'air comprimé à l' intérieur ;
**caractérisé en ce qu'**il comprend en plus:
- un piston (5) dudit vérin pneumatique (11) soutenu par ladite tige (2) et capable de déterminer les butées de glissement dudit vérin pneumatique (11), ledit piston (5) réalisant deux chambres (R, L) à l'intérieur dudit vérin pneumatique (11) et pourvu à l'intérieur d'au moins quatre surfaces tronconiques (14L, 13L, 13R, 14R) d'alimentation et d'échappement de l'air comprimé parmi lesquelles sont montées au moins deux bagues d'étanchéité (6L, 6R) et une pluralité d'orifices radiaux (17R, 17L) capables de permettre le raccordement pneumatique desdites chambres (R, L) dudit vérin pneumatique (11) avec lesdites surfaces tronconiques (14L, 13L, 13R, 14R) d'alimentation et échappement; cette tige (2) étant munie à l'intérieur d'un collecteur (15) qui communique avec un circuit d'air comprimé (60) et relié à au moins une tuyère d'alimentation pneumatique (6P) capable d'alimenter l'air comprimé auxdites chambres (R,L) et de permettre un mouvement de glissement alterné dudit vérin (11);
- un ressort (4) placé en mode coaxial vis-à-vis de ladite tige (2) capable, en absence d'alimentation en air comprimé au dispositif 1, de maintenir ledit piston (2) en une position de fin de course; et
- au moins deux échappements dudit air comprimé chacun communiquant avec une desdites chambres (L, R).

2. Dispositif pneumatique (1) selon la revendication 1, **caractérisé en ce qu'**une bague d'étanchéité (9) capable de garantir une bonne tenue pneumatique est fixée à ladite tige (2).

3. Dispositif pneumatique (1) selon la revendication 1, **caractérisé en ce que** ledit piston (5) possède sur une des ses surfaces extérieures un siège de logement et une bague d'étanchéité pneumatique (16).

4. Dispositif pneumatique (1) selon la revendication 1, **caractérisé en ce que** ladite tige (2) est pourvue de deux sièges de logement de deux bagues d'étanchéité pneumatique (6L, 6R).

5. Dispositif pneumatique (1) selon la revendication 1, **caractérisé en ce que** ledit collecteur (15) est relié à au moins deux tuyères d'alimentation pneumatique (10L, 10R) séparées par une bague d'étanchéité pneumatique (7).

6. Dispositif pneumatique (1) selon la revendication 1, **caractérisé en ce que** ledit mouvement alterné dudit vérin (11) est soutenu par au moins deux roues (22M) fixées à ce vérin (11).

7. Dispositif pneumatique (1) selon la revendication 1, **caractérisé en ce que** ledit mouvement alterné dudit vérin (11) est soutenu par au moins deux roues (22N) fixées au bâti (21).

8. Dispositif pneumatique (1) selon la revendication 1, **caractérisé en ce que** ledit mouvement alterné dudit vérin (11) est soutenu par des roulements linéaires à billes et/ou à rouleaux et/ou avec des patins de soutien.

9. Dispositif pneumatique (1) selon la revendication 1, **caractérisé en ce que** lesdites vitesses différentiables aller-retour dudit mouvement alterné dudit vérin (11) sont réalisées en réduisant le débit d'air des échappements d'air avec l'interposition d'un étranglement (18).

10. Dispositif pneumatique (1) selon la revendication 1, **caractérisé en ce que** lesdites vitesses différentiables aller-retour dudit mouvement alterné dudit vérin (11) sont réalisées en différenciant entre eux les débits d'air comprimé desdites deux tuyères d'alimentation pneumatique (10R, 10L).
